# EUROPEAN PATENT APPLICATION

(11) **EP 4 838 748 A1**
(43) Date of publication of application: **11.11.2026**
(21) Application number: 25174545.1
(22) Date of filing: 06.05.2025
(51) Int. Cl.: H02J 7/00, H01M 10/44, H01M 10/42

(54) **RECHARGEABLE BATTERY AND METHOD OF PERFORMING CHARGE BALANCING IN A RECHARGEABLE BATTERY**

(71) Applicant: Stercom Power Solutions GmbH, 83629 Weyarn (DE)
(72) Inventor: KUTSCHKER, Martin, 83629 Weyarn (DE); FRITZ, Jan Simon, 83629 Weyarn (DE); KELLER, Heinrich, 83629 Weyarn (DE); WITZENBICHLER, Thomas, 83629 Weyarn (DE); SCHÄFER, Victor, 06886 Lutherstadt wittenberg (DE)
(74) Representative: Schmitt-Nilson Schraud Waibel Wohlfrom Patentanwälte Partnerschaft mbB

(57) **Abstract**

A rechargeable battery (2) includes: a plurality of battery modules (10), wherein each of the plurality of battery modules (10) comprises a set of battery cells (12) and a cell management controller (14); a battery management system (30), coupled to the plurality of battery modules (10) and configured to manage charging of the plurality of battery modules (10); and a charge balancing bus (40), coupled to the plurality of battery modules (10); wherein each of the plurality of battery modules (10) comprises a discharge circuit (24), coupled to the set of battery cells (12) of the respective battery module, for an intra-module, passive balancing across the set of battery cells (12) within the respective battery module; wherein each of the plurality of battery modules (10) comprises a DC/DC converter (16), coupled between the respective set of battery cells (12) and the charge balancing bus (40); and wherein the rechargeable battery (2) is configured to supply power from a selected one or a selected subset of the plurality of battery modules (10) to the charge balancing bus (40) for an active balancing across the plurality of battery modules (10), wherein the power from said selected one or said selected subset of the plurality of battery modules (10) is used in the rechargeable battery (2) outside of said selected one or said selected subset of the plurality of battery modules (10).

## Description

The present invention is in the field of rechargeable batteries. In particular, the present invention is in the field of rechargeable batteries having a plurality of battery modules. Further in particular, the present invention is in the field of performing charge balancing in a rechargeable battery.

With recent advances in electric mobility, with the increasing spread of wind power generation, solar power generation, and other kinds of renewable energy generation, and with an increasing electrification of various industries, rechargeable batteries are becoming more and more important. For being able to store large amounts of electric energy, modern rechargeable batteries comprise a plurality of battery modules. Due to production tolerances, due to different aging of the battery modules, which may for example be caused by different thermal loads during charging and discharging, and due to various other factors, the plurality of battery modules may behave differently from one another during charging and discharging of the rechargeable battery. Such different charging / discharging behavior may lead to scenarios where the full capacity of the rechargeable battery cannot be used, leading to an undesired and potentially unnecessary decline of the overall capacity, although there may be only isolated problems in charging / discharging individual battery modules. Also, the different behaviors of the plurality of battery modules may lead to critical situations in the charging / discharging operations, such as overcharging of individual battery modules and/or undesired deep discharging of individual battery modules. For these reasons, efforts have been made to perform charge balancing in rechargeable batteries. However, previous approaches have not been fully satisfactory.

Accordingly it would be beneficial to provide a rechargeable battery with a favorable charge balancing set-up and to provide an according method of performing charge balancing in a rechargeable battery.

Exemplary embodiments of the invention include a rechargeable battery that comprises: a plurality of battery modules, wherein each of the plurality of battery modules comprises a set of battery cells and a cell management controller; a battery management system, coupled to the plurality of battery modules and configured to manage charging of the plurality of battery modules; and a charge balancing bus, coupled to the plurality of battery modules; wherein each of the plurality of battery modules comprises a discharge circuit, coupled to the set of battery cells of the respective battery module, for an intra-module, passive balancing across the set of battery cells within the respective battery module; wherein each of the plurality of battery modules comprises a DC/DC converter, coupled between the respective set of battery cells and the charge balancing bus; and wherein the rechargeable battery is configured to supply power from a selected one or a selected subset of the plurality of battery modules to the charge balancing bus for an active balancing across the plurality of battery modules, wherein the power from said selected one or said selected subset of the plurality of battery modules is used in the rechargeable battery outside of said selected one or said selected subset of the plurality of battery modules.

Exemplary embodiments of the invention allow for a particularly beneficial charge balancing within a rechargeable battery. In particular, the combination of a discharge circuit, which allows for an intra-module, passive balancing within a single battery module, and a charge balancing bus, which is coupled to the plurality of battery modules and allows for an active balancing across the plurality of battery modules, may allow for an effective charge balancing that is associated with comparably low electrical losses and that has comparably low complexity. With the discharge circuits, imbalances within respective battery modules can be effectively addressed. As the battery cells of a particular battery module are commonly from the same production lot and are commonly exposed to similar thermal loads during operation due to their close proximity, the imbalances within a particular battery module are often comparably small, such that the intra-module passive balancing does not lead to a massive waste of electric energy. Stated differently, it has been found that the balancing across the set of battery cells within a particular battery module may be effectively achieved via passive balancing, i.e. via a selective discharge of individual battery cell(s), without dissipating / wasting large amounts of electric energy. This effective way of small-scale balancing within the particular battery modules is combined with a large-scale balancing across the plurality of battery modules via a dedicated charge balancing bus. With this charge balancing bus, power from one or more selected battery modules can be put to good use in other portions of the rechargeable battery via the charge balancing bus. In other words, the charge balancing bus provides for an effective piece of infrastructure that allows for performing a charge balancing across the plurality of battery modules, without having to dissipate / waste the electric energy. With the charge balancing bus, an effective balancing across the plurality of battery modules may be achieved, while the power diverted from the one or the selected subset of the plurality of battery modules can be put to good use within the rechargeable battery.

The charge balancing across the plurality of battery modules may be implemented with the charge balancing bus and a single DC/DC converter for each of the plurality of battery modules. In this way, the balancing across the plurality of battery modules may be achieved with low complexity and with a low number of additional components. The intra-module, passive balancing across the set of battery cells and the active balancing across the plurality of battery modules may provide for a highly effective charge balancing across the whole rechargeable battery, while providing a particularly beneficial trade-off between low complexity, few components, and a low amount of waste energy in operation.

As compared to previous approaches that relied on a full passive balancing across the plurality of battery modules and their respective sets of battery cells, the amount of dissipated / wasted electric energy is significantly reduced with the rechargeable battery described herein. As compared to other previous approaches, which relied on a cell-to-cell active balancing that allows for supplying power from arbitrary power-supplying cells within the rechargeable battery to arbitrary power-receiving cells within the rechargeable battery and that needed a large number of DC/DC converters for the cell-to-cell balancing capabilities, significantly lower complexity and significantly fewer components are required for the rechargeable battery described herein. It may also be said that a particularly beneficial hybrid balancing, combining passive balancing within the battery modules and active balancing across the battery modules, may be achieved with the rechargeable battery described herein.

It has been found that the rechargeable battery, as described herein, is highly effective in balancing battery modules that have significantly different charging / discharging behaviors, in particular battery modules that are at significantly different times in their life cycle. The rechargeable battery, as described herein, is therefore well-suited to handle the replacement of individual power modules and to maintain very good overall charging / discharging characteristics. In particular, in spite of individual battery module replacements and different aging states of the battery modules, the rechargeable battery, as described herein, may still make excellent use of its overall capacity and may store and provide an optimized amount of electric energy. Further, the rechargeable battery may be well-suited to handle the addition of individual battery modules, after the original battery modules have been in use for some time. Also in this situation, the rechargeable battery may handle the different aging states of the battery modules very well.

The rechargeable battery, as described herein, comprises a plurality of battery modules and a battery management system, coupled to the plurality of battery modules. The battery management system is configured to manage the charging of the plurality of battery modules. In addition, the battery management system may also be configured to manage the discharging of the plurality of battery modules. Specifically, the battery management system may manage the charging of the plurality of battery modules with respect to an external charger, such as the power grid. The battery management system may further manage the discharging of the plurality of battery modules with respect to an external load, i.e. the battery management system may manage the discharging of the plurality of battery modules, when the rechargeable battery provides power to an external load. The external load may be any kind of power consumer, but may also be the power grid. In the later case, the rechargeable battery may be associated with a power generating device, such as a solar-based power generator, and may provide power to both local consumers and, if desired, to the power grit. The managing of the charging / discharging may include an observing of the plurality of battery modules and a controlling of the power flow to / from the rechargeable battery on the basis of the observations.

The plurality of battery modules may be connected in series. In other words, the plurality of battery modules may be coupled to each other in such a manner that the voltages of the plurality of battery modules add up and a total voltage is provided at the external battery terminals of the rechargeable battery. In yet other words, the plurality of battery modules are connected in series between external battery terminals of the rechargeable battery, to which an external load may be connected or to which an external charger may be connected. Physically, the plurality of battery modules may be provided as a stack of battery modules, jointly forming the rechargeable battery. The battery management system may be one of the building blocks of said stack.

Each of the plurality of battery modules comprises a set of battery cells and a cell management control. The set of battery cells may in particular be a string of battery cells / a series connection of battery cells. The cell management controller may also be refered to as a module management controller or as a module-level controller. The battery cells may be lithium-ion cells, such as lithium iron phosphate cells, or may be any other kind of rechargeable battery cells.

The battery management system is coupled to the plurality of battery modules. In particular, the battery management system may be coupled to the cell management controllers of the plurality of battery modules. Further in particular, a battery communication bus may be provided between the battery management system and the cell management controllers of the plurality of battery modules. The battery management system may provide a high-level control for the cell management controllers of the plurality of battery modules. The battery management system and the cell management controllers may co-operate to effect the intra-module, passive balancing across the sets of battery cells of the plurality of battery modules and to control the supply of power from the selected one or the selected subset of the plurality of battery modules to the charge balancing bus via the appropriate DC/DC converter(s). It is also possible that the cell management controllers effect the intra-module passive balancing on their own and that the battery management system provides the high-level control for the cell management controllers with respect to the power supply towards the charge balancing bus.

The terms passive balancing and active balancing, as used herein, relate to charge balancing across the set of battery cells of a particular battery module and to charge balancing across the plurality of battery modules, respectively. The term passive balancing refers to charge balancing by discharge / dissipation. In other words, the term passive balancing refers to charge balancing across the set of battery cells of a particular battery module via dissipating / burning / wasting electric energy of one or more selected battery cells. For each of the plurality of battery modules, the respective discharge circuit may be part of the cell management controller or may be implemented separately, such as separate piece of circuitry in the perspective battery module. The discharge circuit may be implemented in any suitable manner. For example, the discharge circuit may allow for a selective connection of each battery cell of the set of battery cells to a dissipating resistor, which is in turn coupled to ground or to another suitable sink of electric energy.

In contrast to the passive balancing described above, the term active balancing relates to the usage of power outside of the battery module in question. Specifically, active balancing means that the power, supplied from the selected one or the selected subset of the plurality of battery modules to the charge balancing bus, is not simply dissipated / wasted, but put to use in a different portion of the rechargeable battery. In this context, the term active balancing encompasses both the usage of power in the form of a charge transfer from at least one power-supplying battery module to at least one power-receiving battery module as well as the usage of power from the selected one or the selected subset of the plurality of battery modules at other components / other consumers / other loads within the rechargeable battery. This will be laid out in more detail below. As the charge balancing bus allows for a selective withdrawal of electric energy from the battery modules and allows for passing on the electric energy, the charge balancing bus is a bus for inter-module, active balancing across the plurality of battery modules.

The above described combination of intra-module, passive balancing across the sets of battery cells of the plurality of battery modules and the inter-module, active balancing across the plurality of battery modules via the charge balancing bus may take place during the charging of the rechargeable battery. In addition, said hybrid balancing may be carried out when the rechargeable battery is discharged, i.e. when the rechargeable battery provides power to an external load. Stated differently, the rechargeable battery may be configured to carry out the intra-module, passive balancing across the sets of battery cells of the plurality of battery modules and the inter-module, active balancing across the plurality of battery modules during the charging and/or the discharging of the rechargeable battery.

According to a further embodiment, the battery management system is coupled to the charge balancing bus, and the rechargeable battery is configured to supply power from said selected one or said selected subset of the plurality of battery modules to the battery management system via the charge balancing bus. In this way, the battery management system may be a power consumer for the power supplied by the selected one or the selected subset of the plurality of battery modules in the course of the active balancing across the plurality of battery modules. The power that is withdrawn from the selected one or the selected subset of the plurality of battery modules may be put to use in the battery management system of the rechargeable battery. Accordingly, the active balancing across the plurality of battery modules may lead to the battery management system benefitting from the withdrawn power, which in turn helps the overall efficiency of the rechargeable battery.

As a side note, it is stressed herewith that the provision of power from the selected one or the selected subset of the plurality of battery modules to the charge balancing bus and from the charge balancing bus to the battery management system is considered its own invention. In other words, the active balancing across the plurality of battery modules via the usage of power at the battery management system is considered its own invention. It is herewith explicitly disclosed that the features that the battery management system is coupled to the charge balancing bus and that the rechargeable battery is configured to supply power from said selected one or said selected subset of the plurality of battery modules to the battery management system via the charge balancing bus can be implemented without the feature of the discharge circuits in the plurality of battery modules and without the feature of the intra-module, passive balancing across the sets of battery cells via the discharge circuits and that such implementation is considered its own invention. The additional features, modifications, and effects, as described herein, are also applicable to this own invention.

According to a further embodiment, the battery management system comprises a battery controller, and the battery management system is configured to operate the battery controller with power supplied from said selected one or said selected subset of the plurality of battery modules to the battery management system via the charge balancing bus. Accordingly, the battery controller may be supplied with and may be a consumer to the power supplied via the charge balancing bus. The battery controller may in particular be a microcontroller. The battery controller may be a device dedicated to the managing of the rechargeable battery, in particular dedicated to the managing of the charging and discharging of the plurality of battery modules. The battery controller may be coupled to the cell management controllers of the plurality of battery modules, e.g. via a battery communication bus.

According to a further embodiment, the rechargeable battery is configured to select the selected one or the selected subset of the plurality of battery modules on the basis of the respective state of charge of the plurality of battery modules. In particular, for each of the plurality of battery modules, the respective state of charge may be determined, and the one or more of the plurality of battery modules, from which power is supplied to the charge balancing bus, may be selected on the basis of the determined state of charge of the plurality of battery modules. In case the state of charge is used as the relevant metric, the charge balancing across the rechargeable battery may also be refered to as a state of charge balancing. The state of charge is a well-established metric, which is a commonly relied upon value for the momentary charge state / momentary charge level of a rechargeable battery entity. The state of charge may be expressed as a ratio between the charge currently stored in a battery entity and the maximum charge the battery entity can hold at its current state of aging. Accordingly, the state of charge may be expressed in the range of between 0% an 100%, and the actual value of the state of charge depends on how much charge is currently in the battery entity. State of charge is a well-known metric, and the skilled person is aware of suitable methods of determining the state of charge from available electrical parameters of a rechargeable battery entity.

With state of charge balancing, potentially detrimental situations such as continued charging at an already very high state of charge, may be prevented for individual battery modules / individual battery cells. While avoiding such potentially detrimental situations is beneficial per se, preventing such situations may also help to avoid a premature stopping of the charging of the entire rechargeable battery due to overcharge alerts or other safety measures. This in turn may help to use the rechargeable battery in an optimized manner, effectively taking into account different individual conditions of the battery modules / of the battery cells.

According to a further embodiment, said selected one or said selected subset of the plurality of battery modules has / have a higher state of charge than the non-selected battery modules. In other words, the one or more selected battery modules, from which power is supplied to the charge balancing bus, is / are the battery module(s) with the highest state of charge. In yet other words, the selection of the selected one or the selected subset of the plurality of battery modules may be done to ensure that power is diverted from that / those battery module(s) with the highest state of charge. In this way, the battery module(s) that is / are closest to their maximum capacity are primarily used for implementing the active balancing across the plurality of battery modules.

According to a further embodiment, the rechargeable battery is configured to set a state of charge threshold and to select said selected one or said selected subset of the plurality of battery modules on the basis of the state of charge threshold. With such a state of charge threshold, a straightforward decision-making with respect to the active balancing may be implemented. An easily followable metric can be communicated from the battery management system to the cell management controllers of the plurality of battery modules. Within the individual battery modules, a simple yes/no determination can be made by making a comparison between the state of charge of the battery module in question and the state of charge threshold, with the result of said comparison determining whether the battery module supplies power to the charge balancing bus or not.

According to a further embodiment, the rechargeable battery is configured to set the state of charge threshold on the basis of a distribution of the state of charge of the plurality of battery modules. In other words, when the state of charge is available for each of the plurality of battery modules, these values can be related and the state of charge threshold can be set on the basis of said relating of the available values. For example, it is possible to determine the average / mean or the median of the state of charge of the plurality of battery modules and to set the state of charge threshold depending on the determined average / mean or depending on the determined median. Further in particular, it is possible to set the state of charge threshold at a particular value above the average / mean, such as at 110% or at 120% or at 130% of the average / mean. More generally, it is possible to set the state of charge threshold to a value between 100% and 150%, in particular to a value between 100% and 130%, further in particular to a value between 100% and 120% of the average / mean or of the median of the state of charge of the plurality of battery modules. The state of charge threshold may in particular be chosen depending on the desired usage of the power on the charge balancing bus. For example, in case the power on the charge balancing bus is used for charging battery modules with a lower state of charge, the state of charge threshold may be set at a lower value, as compared to a situation where the power on the charge balancing bus is used for the battery management system or other consumers only. Further, the state of charge threshold may be dependent on whether a charging operation is in its early stages, meaning that the average of the state of charge is rather low, or towards its later stages, meaning that the average of the state of charge is comparably high. In the latter case, the state of charge threshold may be set closer to the average / mean or median, in order to stay away from undesired overcharging or near-overcharging situations.

According to a further embodiment, the rechargeable battery is configured to select a predefined number of battery modules with the highest state of charge as said selected one or said selected subset of the plurality of battery modules. In a particular embodiment, the rechargeable battery may be configured to select the one battery module with the highest state of charge as said selected one of the plurality of battery modules, from which power is supplied to the charge balancing bus. Alternatively, the rechargeable battery may be configured to select exactly those two or three or four or five battery modules with the highest state of charge as said selected subset of the plurality of battery modules, from which power is supplied to the charge balancing bus. In other words, the said predefined number of battery modules may be one battery module or two battery modules or three battery modules or four battery modules or five battery modules or another suitable predefined number of battery modules. The chosen predefined number may depend on the particular implementation of the rechargeable battery. With this selection, it may be ensured that that / those battery module(s) with the highest state of charge are used for withdrawing power to the power balancing bus, while the predefined number of battery modules allows for an implementation that is particularly easy to handle. For example, when the predefined number is known, a time sequence for supplying power by the selected subset of the plurality of battery modules in a round robin fashion may be easily implemented.

According to a further embodiment, the rechargeable battery is configured to select said selected one or said selected subset of the plurality of battery modules on the basis of the respective state of charge and the respective state of health of the plurality of battery modules. The state of health is a well-established metric that provides an indication how the current maximum capacity of a battery entity compares to its initial / nominal maximum capacity. Stated differently, the state of health provides an indication how far along the aging process of a battery entity is. In an exemplary embodiments, the state of health may be used to modify the selection criterion for the selected one or the selected subset of the plurality of battery modules, from which power is supplied to the charge balancing bus. For example, it is possible that the rechargeable battery is configured to set a first state of charge threshold for battery modules with a comparably good state of health and to set a second state of charge threshold for battery modules with a comparably bad state of health. The first state of charge threshold may be higher than the second state of charge threshold, and the distinction between the good state of health and the bad state of health may be made via a state of health threshold. With such an approach, battery modules with a comparably bad state of health may by selected earlier for supplying power to the charge balancing bus. In this way, a more gentle charging of the battery modules with a comparably bad state of health may be enforced, which may help to extend the life span / to delay a necessary replacement of the battery module in question.

According to a further embodiment, the rechargeable battery is configured to select said selected one or said selected subset of the plurality of battery modules in a centralized manner at the battery management system. In other words, the battery management system may be configured to select the one or more battery modules, from which power is to be supplied to the charge balancing bus. The selection result may be communicated to the plurality of battery modules via the battery communication bus. In such an implementation, the plurality of battery modules may communicate their respective state of charge to the battery management system, and the battery management system may carry out the selection of the selected one or the selected subset of the plurality of battery modules, from which power is supplied to the charge balancing bus. The battery management system may evaluate the distribution of the state of charge, as discussed above. By carrying out the selection in a centralized manner at the battery management system, the momentary information regarding the plurality of battery modules needs to be collected at one point only, and the determination regarding said selected one or said selected subset of the plurality of battery modules only needs to be carried out at said centralized location.

According to a further embodiment, the rechargeable battery is configured to select said selected one or said selected subset of the plurality of battery modules in a decentralized manner at the cell management controllers of the plurality of battery modules. In such an implementation, each of the cell management controllers may gather the data from the plurality of battery modules. In particular, each cell management controller may gather the state of charge information of each of the plurality of battery modules. The cell management controllers may all operate with the same logic for selecting the one or more battery modules, from which power is to be supplied to the charge balancing bus. In this way, the cell management controllers may determine the same result regarding said selected one or said selected subset of the plurality of battery modules, and a decentralized control for the provision of power to the charge balancing bus may be implemented. In such a set-up, the inter-module, active balancing across the plurality of battery modules may be implemented without the help of the battery management system.

According to a further embodiment, the DC/DC converters of the plurality of battery modules are unidirectional DC/DC converters. The DC/DC converters may be unidirectional by design, e.g. via the prevision on an associated unidirectional circuit element, such as a diode. It is also possible that the DC/DC converters are unidirectional via an according control thereof. In case the DC/DC converters of the plurality of battery modules are unidirectional DC/DC converters, they only allow power transfer from the respective set of battery cells towards the charge balancing bus. In other words, the unidirectional DC/DC converters only allow outbound power transfer from the battery module in question to the charge balancing bus, while blocking inbound power transfer. In such an implementation, the power that is supplied to the charge balancing bus in the course of the active balancing across the plurality of battery modules may be used for supplying power to the battery management system and/or to other loads within the rechargeable battery. However, the power may not be used for charging particular ones of the plurality of battery modules with power from other ones of plurality of battery modules.

According to a further embodiment, the DC/DC converters of the plurality of battery modules are bidirectional DC/DC converters. Such bidirectional DC/DC converters may be selectively coupleable to the charge balancing bus, e.g. via an associated switch arranged between the DC/DC converter and the charge balancing bus. Accordingly, the bidirectional connection between the DC/DC converter of a particular battery module and the charge balancing bus may be a switchable connection. In this way, a full control regarding the coupling between the battery module and the charge balancing bus may be achieved. It is also possible that the bidirectional power transfer capability of the DC/DC converters is achieved via an according control thereof.

According to a further embodiment, the rechargeable battery is configured to supply power from said selected one or said selected subset of the plurality of battery modules to one or more power-receiving battery modules of the plurality of battery modules via the charge balancing bus. In other words, the rechargeable battery may be configured to select one or more power-supplying battery modules, herein refered to as the selected one or the selected subset of the plurality of battery modules, to select one or more power-receiving modules, and to effect a power transfer from the power-supplying battery module(s) to the power-receiving battery module(s) via the charge balancing bus. In this way, an active balancing across the plurality of battery modules via charge transfer among the plurality of battery modules may be achieved. This may in turn help a particularly efficient and quick charging of the rechargeable battery. In particular, charging imbalances, which may arise during a charging operation, may be mitigated via a suitable charge transfer among the plurality of battery modules via the charge balancing bus. An inter-module, active balancing may be implemented that helps the plurality of battery modules to jointly reach their fully charged state in an optimized manner. The described charge transfer among the plurality of battery modules via the charge balancing bus may take place in addition to or as an alternative to the provision of power to the battery management system and/or to further loads via the charge balancing bus.

According to a further embodiment, the respective DC/DC converter of each of the plurality of battery modules has an ancillary power output, coupled to the respective cell management controller for supplying power to the respective cell management controller. In this way, the cell management controller(s) of the selected one or the selected subset of the plurality of battery modules may act as a load with respect to the power intended for the charge balancing bus. Accordingly, power withdrawn from the selected one or the selected subset of the plurality of battery modules may be used to power one or more cell management controllers of the plurality of battery modules. In this way, the withdrawn power is put to use within the respective battery module, the respective cell management controller(s) may use less external power for their operation, and the overall efficiency of the rechargeable battery may be improved.

For implementing this functionality, the respective DC/DC converter may be embodied as a three-way transformer, coupled to the charge balancing bus on the bus side of the transformer, coupled to the set of battery cells on the battery side of the transformer, and coupled to an additional power supply input of the cell management controller on the battery side of the transformer. The DC/DC converter may act as a dual purpose transformer, being configured to supply power from the set of battery cells to both the charge balancing bus and to the additional power supply input of the cell management controller.

According to a further embodiment, the respective cell management controller of each of the plurality of battery modules is configured to control the associated DC/DC converter of the respective battery module. As laid out above, the cell management controller may receive instructions for operating the DC/DC converter from the battery management system. These instructions may be communicated from the battery management system to the cell management controller via a battery communication bus, and the cell management controller may act in accordance with these instructions.

According to a further embodiment, the battery management system is configured to effect a cold start / black start of the rechargeable battery with power supplied from the plurality of battery modules to the charge balancing bus. In this way, the charge balancing bus may additionally provide the infrastructure for providing a cold start functionality / black start functionality to the rechargeable battery. In particular, via the charge balancing bus, the available power in the plurality of battery modules may be used for a cold start of the rechargeable battery. The rechargeable battery may be able to power up, without being connected to external power. For initiating the cold start, a cold start button, which may be provided on the battery management system, may be operated by a user, and the battery management system may wake up. For continuing the cold start within the rechargeable battery, a wake-up pulse / wake-up signal may be supplied from the battery management system to the cell management controllers of the plurality of battery modules. The cell management controllers may then operate the plurality of battery modules to provide the power required for the cold start to the charge balancing bus.

According to a further embodiment, the rechargeable battery is a stationary rechargeable battery. The rechargeable battery, as described herein, is particularly suitable for stationary applications. In stationary applications, the modular set-up of a rechargeable battery is often relied upon, and replacements of individual battery modules are commonly carried out. Accordingly, in stationary rechargeable batteries, the situation often arises that comparably new battery modules are combined with significantly aged battery modules. With new and aged battery modules having significantly different charging and discharging behavior, the balancing functionality of the rechargeable battery, as described herein, may be used in a particularly beneficial manner.

According to a further embodiment, the rechargeable battery is a vehicle-based rechargeable battery. Again, the charge balancing, as described herein, is particularly beneficial in rechargeable batteries with one or more replaced battery modules. Replacements of individual battery modules are commonly performed in rechargeable batteries of large vehicles, such as large ships, large construction vehicles, etc..

Exemplary embodiments of the invention further include a method of performing charge balancing in a rechargeable battery, the rechargeable battery comprising a plurality of battery modules, with each of the plurality of battery modules comprising a set of battery cells, a DC/DC converter and a discharge circuit, and a charge balancing bus, coupled to the plurality of battery modules; wherein the method comprises: at each of the plurality of battery modules, performing intra-module, passive balancing across the set of battery cells with the discharge circuit; performing active balancing across the plurality of battery modules by supplying power from a selected one or a selected subset of the plurality of battery modules to the charge balancing bus via the respective DC/DC converter; and using the power from said selected one or said selected subset of the plurality of battery modules in the rechargeable battery outside of said selected one or said selected subset of the plurality of battery modules. The additional features, modifications, and effects, as described herein with respect to the rechargeable battery, apply to the method of performing charge balancing in a rechargeable battery in an analogous manner. Conversely, the additional features, modifications, and effects, as described herein with respect to the method of performing charge balancing in a rechargeable battery, also apply to the rechargeable battery in an analogous manner.

According to a further embodiment, the method comprises supplying power from the charge balancing bus to the battery management system, in particular to a battery controller of the battery management system, and using the power in the battery management system.

According to a further embodiment, the method comprises selecting said selected one or said selected subset of the plurality of battery modules on the basis of the respective state of charge of the plurality of battery modules.

According to a further embodiment, the method comprises setting a state of charge threshold and selecting said selected one or said selected subset of the plurality of battery modules on the basis of the state of charge threshold. The method may in particular include setting the state of charge threshold on the basis of a distribution of the state of charge of the plurality of battery modules.

According to a further embodiment, the method comprises selecting a predefined number of battery modules with the highest state of charge as said selected one or said selected subset of the plurality of battery modules.

According to a further embodiment, the method comprises selecting said selected one or said selected subset of the plurality of battery modules on the basis of the respective state of charge and the respective state of health of the plurality of battery modules.

According to a further embodiment, the method comprises supplying power from said selected one or said selected subset of the plurality of battery modules to one or more selected power-receiving battery modules of the plurality of battery modules via the charge balancing bus. The method may in particular comprise selecting at least one power-supplying battery module as said selected one or said selected subset of the plurality of battery modules and selecting at least one power-receiving battery module, which is different from the at least one power-supplying batter module, and effecting a power transfer from the at least one power-supplying battery module to the at least one power-receiving battery module via the charge balancing bus.

According to a further embodiment, the method comprises effecting a cold start of the rechargeable battery with power supplied from the plurality of battery modules to the charge balancing bus.

Further exemplary embodiments of the invention are described in detail below with reference to the accompanying drawings, wherein:
Fig. 1 shows a block diagram of a rechargeable battery in according with an exemplary embodiment of the invention;
Fig. 2 shows a block diagram of a rechargeable battery in accordance with another exemplary embodiment of the invention; and
Fig. 3 shows a block diagram of a rechargeable battery in accordance with yet another exemplary embodiment of the invention.

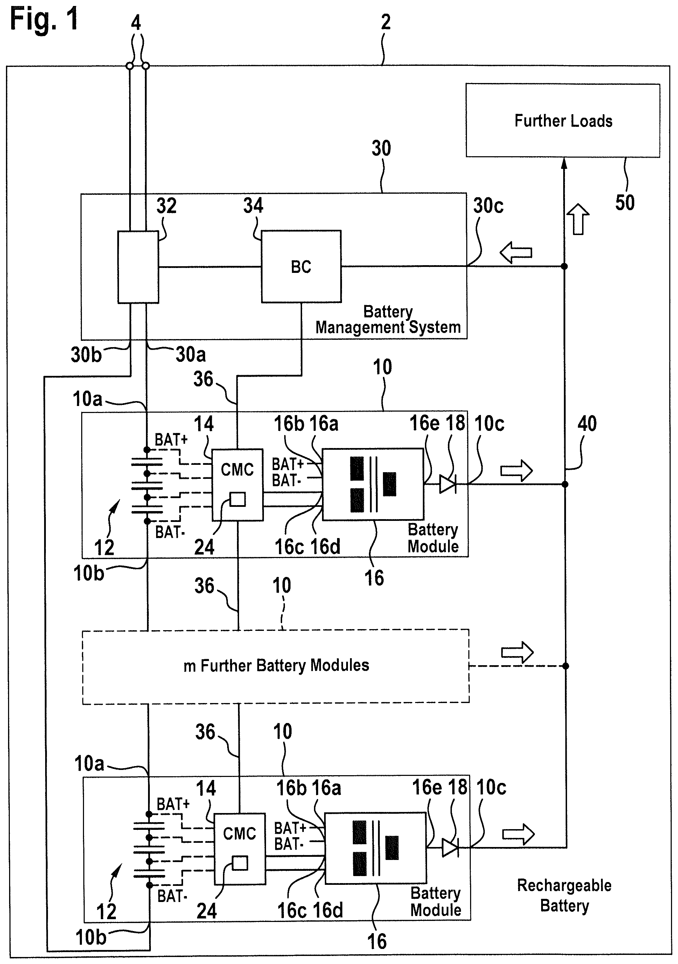

Fig. 1 shows a block diagram of a rechargeable battery 2 according to an exemplary embodiment of the invention. The rechargeable battery 2 has two external battery terminals 4, which provide for the external connection functionality of the rechargeable battery 2. The external battery terminals 4 may be connected to an external load, to which the rechargeable battery 2 may provide power. Also, the external battery terminals 4 may be connected to an external charger, from which the rechargeable battery 2 may receive power. Accordingly, the external battery terminals 4 provide for a two-way connection, through which power may be received or supplied.

The rechargeable battery 2 comprises a plurality of battery modules 10. In Fig. 1, two battery modules 10 are shown with various components, which will be described in detail below. A dashed box symbolizes m further battery modules, which are interposed between the two fully shown battery modules 10. Accordingly, the rechargeable battery 2 of Fig. 1 comprises m+2 battery modules. It is understood that the number of m+2 battery modules is exemplary and that the rechargeable battery 2 may have any suitable number of battery modules 10. For example, the rechargeable battery 2 may have between 3 and 20 battery modules 10.

In the exemplary embodiment of Fig. 1, all of the battery modules 10 are of the same or substantially the same design. While the following description is given for a single battery module 10, it is understood that the other battery modules 10 have corresponding components as well.

The battery module 10 has a set of battery cells 12. The set of battery cells 12 are connected in series between a first terminal 10a of the battery module 10 and a second terminal 10b of the battery module 10. For illustrative purposes, three battery cells are shown per battery module 10 in Fig. 1. However, it is understood that the battery module 10 may generally have n battery cells, connected in series between the first terminal 10a and the second terminal 10b of the battery module 10. For example, the battery module 10 may have between 10 and 40 battery cells 12.

The battery module 10 further comprises a cell management controller 14, indicated as CMC 14 in Fig. 1. The cell management controller is coupled to the set of battery cells 12. For illustrative purposes, dashed lines are shown in Fig. 1 between the cell management controller 14 and the nodes at the ends of the set of battery cells 12 and the nodes in between the set of battery cells 12. These dashed lines represent electrical connections, with which the cell management controller can tap into the set of battery cells 12 at every point in between the battery cells and at the ends of the series connection of the battery cells 12. With these electrical connections, the cell management controller 14 can observe the electrical behavior of the battery cells 12 and can divert electric energy from the battery cells 12, as will be explained in more detail below. The electrical connections to the end nodes of the set of battery cells 12 are denoted with BAT+ and BAT-, as the difference in potential between these two nodes represents the current voltage of the battery module 10.

The battery module 10 further comprises a discharge circuit 24. The discharge circuit 24 is coupled to the set of battery cells 12. In particular, the discharge circuit 24 is coupled to the nodes at the ends of the set of battery cells 12 and to the nodes in between the set of battery cells 12. In the exemplary embodiment of Fig. 1, the discharge circuit 24 is part of the cell management controller 14. In this way, the discharge circuit 24 can use the electrical connections to the set of battery cells 12 that are shown as dashed lines between the cell management controller 14 and the set of battery cells 12. It is also possible that the discharge circuit 24 is embodied as a separate component, i.e. as a component separate from the cell management controller 14. In that case, the discharge circuit 24 may be coupled to the nodes of the set of battery cells 12 via separate electrical connections or may tap into the electrical connections shown as dashed lines between the cell management controller 14 and the set of battery cells 12.

The discharge circuit 24 is configured to selectively discharge one or more of the set of battery cells 12. In other words, the discharge circuit 24 is configured to discharge a selected one or a selected subset of the battery cells 12, when such a discharge is desired. In yet other words, the discharge circuit 24 is capable of performing an isolated discharge for each of the set of battery cells 12.

The discharge circuit 24 may have any suitable circuit structure that allows for dissipating charge from selected one(s) of the battery cells 12. For example, it is possible that the discharge circuit 24 can couple each of the nodes of the set of cells 12 to ground or to another suitable charge sink via a dissipating resistor. With the discharge circuit, electric energy, stored in the set of battery cells 12, can be removed from individual battery cell(s) and can be converted into waste heat.

The battery module 10 further comprises a DC/DC converter 16 and an associated diode 18. The diode 18 is arranged between the DC/DC converter 16 and a third terminal 10c of the battery module 10. The diode 18 allows power flow from the DC/DC converter 16 to the third terminal 10c, but blocks power flow from the third terminal 10c towards the DC/DC converter 16. With this co-operation between the DC/DC converter 16 and the diode 18, the DC/DC converter 16 is considered a unidirectional DC/DC converter.

The DC/DC converter 16 has a first terminal 16a, a second terminal 16b, a third terminal 16c, a fourth terminal 16d, and a fifth terminal 16e. The first and second terminals 16a, 16b are coupled to the opposite end nodes of the set of battery cells 12. They may be coupled directly to these opposite end nodes of the set of battery cells 12 or may be coupled thereto via the cell management controller 14. In analogy to the labelling of the dashed lines between the cell management controller 14 and the opposite end nodes of the set of battery cells 12, the first and second terminals 16a, 16b are labelled with BAT+ and BAT-.

The third terminal 16c of the DC/DC converter 16 is coupled to the cell management controller 14. The third terminal 16c is a control terminal of the DC/DC converter 16, through which control commands are received from the cell management controller 14. The fourth terminal 16d of the DC/DC converter 16 is referred to as an ancillary power output 16d of the DC/DC converter and is coupled to the cell management controller 14. Via the ancillary power output 16d, the DC/DC converter 16 may supply power to the cell management controller 14 for its operation. The first to fourth terminals 16a, 16b, 16d, 16c are also referred to as battery-side terminals.

The fifth terminal 16e of the DC/DC converter is coupled to the third terminal 10c of the battery module 10 via the diode 18, as discussed above. In other words, the fifth terminal 16e of the DC/DC converter is coupled to the diode 18, which in turn is coupled to the third terminal 10c of the battery module 10. The forward direction of the diode 18 is from the fifth terminal 16e of the DC/DC converter 16 to the third terminal 10c of the battery module 10. It is understood that any other suitable kind of unidirectional component may be used instead of the diode 18. It is also possible that the DC/DC converter is used in a unidirectional manner through an according control thereof. It is further possible to provide a switched component instead of the diode 18 and to control the switching of this switched component in a manner to provide unidirectional power flow to the third terminal 10c of the battery module 10. While all these options are possible, the diode 18 is a highly effective and cost-efficient way of establishing unidirectionality of the DC/DC converter 16.

In the exemplary embodiment of Fig. 1, the DC/DC converter 16 is a three-way transformer. A first winding of the three-way transformer is coupled to the first and second terminals 16a, 16b, i.e. to the end nodes of the set of battery cells 12. A second winding of the DC/DC converter 16 is coupled to the fourth terminal 16d, i.e. to the ancillary power output of the DC/DC converter 16. The first and second windings are referred to as the battery side of the transformer. A third winding of the three-way transformer is coupled to the fifth terminal 16e of the DC/DC converter 16, i.e. to the third terminal 10c of the battery module 10. In operation, power from the set of battery cells 12 may be supplied both to the third terminal 10c of the battery module 10 and to the ancillary power output 16d of the DC/DC converter, details of which will be described below.

The rechargeable battery 2 further comprises a battery management system 30. The battery management system 30 comprises an input stage 32. Said input stage 32 is coupled to the external battery terminals 4 of the rechargeable battery 2 and is coupled to first and second internal battery terminals 30a, 30b. Said internal battery terminals 30a, 30b are also referred to herein as the first terminal 30a and the second terminal 30b of the battery management system 30. In this way, the input stage 32 couples the external battery terminals 4 to the internal battery terminals 30a, 30b of the rechargeable battery 2. Besides having the functionality of establishing an electrical contact between the external battery terminals 4 and the internal battery terminals 30a, 30b, the input stage 32 may have various kinds of measurement capabilities, in order to observe / track the power flow into and out of the rechargeable battery 2. The input stage 32 may also have safety circuitry, such as air gap switches.

The plurality of battery modules 10 are connected in series between the first terminal 30a and the second terminal 30b of the battery management system 30. In particular, the sets of battery cells 12 of all the battery modules 10 are connected in series between the first internal battery terminal 30a and the second internal battery terminal 30b of the battery management system 30. Accordingly, the voltage between the first and second internal battery terminals 30a, 30b corresponds to the sum of all voltages of all battery cells 12 of all battery modules 10. Accordingly, connecting an external charger to the external battery terminals 4 or connecting an external load to the external battery terminals 4 of the rechargeable battery 2 leads to a charging or discharging of all battery cells 12 of all battery modules 10. In exemplary embodiments, the voltage between the internal battery terminals 30a, 30b may be between 100 V and 1500 V, when the rechargeable battery is fully charged.

The battery management system 30 further comprises a battery controller 34, indicated as BC 34 in Fig. 1. The battery controller 34 is a microcontroller that is arranged in the battery management system 30 and that is dedicated to controlling the operation of the battery management system 30 and of the rechargeable battery 2 as a whole. The battery controller 34 is coupled to the input stage 32. Via the input stage 32, the battery controller 34 may gather data regarding the power flow into/out of the rechargeable battery 2 and may provide commands regarding the starting and stopping of any charging of the rechargeable battery 2 or any power supply to an external load of the rechargeable battery 2.

The battery controller 34 is further coupled to the cell management controller 14 of the plurality of battery modules 10 via a battery communication bus 36. Via the battery communication bus 36, the battery controller 34 may gather information regarding the electric behavior of the plurality of battery modules 10 and may provide operating commands to the plurality of battery modules 10. These operating commands may in particular include operating commands regarding charge balancing operations in the plurality of battery modules 10, as will be described in more detail below.

The rechargeable battery 2 further comprises a charge balancing bus 40. The charge balancing bus 40 is coupled to the respective third terminals 10c of the plurality of battery modules 10 and is coupled to a third terminal 30c of the battery management system 30. The third terminal 30c of the battery management system 30 is in turn coupled to the battery controller 34. In the exemplary embodiment of Fig. 1, the charge balancing bus 40 is additionally coupled to further loads 50 of the rechargeable battery 2. Such further loads 50 may for example include a communication module of the rechargeable battery 2, in particular a wireless communication module, a user interface system of the rechargeable battery 2, and other devices that provide further ancillary functions of the rechargeable battery 2.

Via the charge balancing bus 40, power may be supplied from one or more battery modules 10 to the battery management system 30 and/or to the further loads 50. This is indicated via according arrows in Fig. 1, which leave the battery modules 10 at the third terminals 10c and which point towards the battery management system 30 and towards the further loads 50. As will be described in more detail below, an active balancing across the plurality of battery modules 10 may be achieved via the charge balancing bus 40, wherein the power withdrawn from a selected one or a selected subset of the plurality of battery modules 10 is supplied to and used at the battery management system 30 and/or at the further loads 50.

For each of the plurality of battery modules 10, the third terminal 10c is coupled to the charge balancing bus 40. For this reason, the fifth terminal 16e of the DC/DC converter 16 may also be referred to as the bus-side terminal 16e of the DC/DC converter 16. Analogously, the third winding of the three-way transformer of the DC/DC converter 16, i.e. the winding of the DC/DC converter 16 that is coupled to the fifth terminal 16e, may also be referred to as the bus-side winding of the transformer.

A charging operation of the rechargeable battery 2 is described as follows. For charging the rechargeable battery 2, the external battery terminals 4 are coupled to an external power source. The external power source may be any kind of power source that is capable of charging the rechargeable battery 2. In other words, the rechargeable battery 2 may be coupled to any suitable external charger for the charging operation. The external power source may be a power generation system, such as a photovoltaic device, or may be a power distribution system, such as the power grid.

After the coupling of the rechargeable battery 2 to the external power source and after the starting of the charging operation by the battery controller 34, a power flow from the external power source to the sets of battery cells 12 of the plurality of battery modules 10 takes place. In the exemplary embodiment of Fig. 1, said power flow into the rechargeable battery passes through the input stage 32 of the battery management system 30. The sets of battery cells 12 of the plurality of battery modules 10 start to charge.

The building up of the charge in the battery cells 12 of the battery modules 10 takes place in an inherently imbalanced manner. Due to production tolerances and/or different levels of aging and/or different momentary operating temperatures and/or other factors, the battery cells commonly have different electric behaviors and react somewhat differently to the inflow of power from the external power source. Stated differently, the battery cells 12 of the battery modules 10 commonly have variations in building up charge.

The imbalanced charging of the battery cells 12 is detrimental in various ways. On the one hand, the imbalanced charging of the battery cells 12 may lead to different strains on the battery cells, such that the spread in the electric behavior of the battery cells may grow larger and larger over time. Different levels of aging and different life spans of the battery cells may follow. Early replacements of battery modules and replacements of battery modules at different times are potential consequences. On the other hand, the imbalanced charging of the battery cells 12 can lead to the rechargeable battery 2 being used significantly below its maximum capacity. When the first individual battery cells 12 reach their individual maximum capacity and there is a risk of damaging / negatively affecting the battery cells 12 due to overcharging, the rechargeable battery 2 may be forced to stop charging altogether. In this way, in the absence of countermeasures to the imbalances, the rechargeable battery 2 may be used with poor overall capacity.

The rechargeable battery 2 according to an exemplary embodiment of the invention, as shown in Fig. 1, provides for charge balancing in a two-fold manner. On the one hand, an intra-module, passive balancing across the respective set of battery cells 12 takes place in each battery module 10. On the other hand, an inter-module, active balancing takes place via the charge balancing bus 40.

The passive balancing is effected on a per-module basis via the discharge circuit 24 of the respective battery module 10. Imbalances between the set of battery cells 12 of a particular battery module 10 are counteracted with the help of the discharge circuit 24 within the particular battery module 10. The cell management controller 14 of a particular battery module measures and observes the charging of the plurality of battery cells 12 on a cell-by-cell level. The cell management controller 14 may for example determine the momentary absolute charge of each of the set of battery cells 12 of the particular battery module 10. It is also possible that the cell management controller 14 determines the state of charge of each of the set of battery cells 12 of the particular battery module 10. The state of charge is a well-established metric and relates the momentary charge of a battery entity, such as a battery cell, to a maximum capacity of the battery entity at the current state of aging of the battery entity. With the battery cells of a particular battery module 10 commonly stemming from the same production lot, commonly having the same number of operating hours and charging cycles, and commonly being exposed to similar thermal loads, both the absolute charge as well as the state of charge are good metrics for the intra-module, passive balancing.

The cell management controller 14 may counteract the imbalances across the set of battery cells 12 as follows. When detecting that one or more of the set of battery cells 12 have an undesirably high absolute charge / an undesirable high state of charge, as compared to the other battery cells in the set of battery cells, the one or more battery cells with the undesirably high absolute charge / undesirably high state of charge are discharged via the discharge circuit 24, until the set of battery cells 12 reaches a more balanced state. For example, it is possible that the battery cells with the comparably higher absolute charge / state of charge are discharged, until they reach a predefined target charge / target state of charge. In a particular example, the battery cells with the comparably higher absolute charge / state of charge may be discharged, until their absolute charge / state of charge reaches a target charge / target state of charge in between 100% and 130%, in particular a target charge / target state of charge in between 105% and 120%, of the absolute charge / state of charge of that battery cell with the lowest absolute charge / state of charge. Stated differently, the target charge / target state of charge in the passive balancing may be a value of between 100% and 130%, in particular a value of between 105% and 120%, of the absolute charge / state of charge of that battery cell with the lowest absolute charge / state of charge.

With such passive balancing across the set of battery cells 12, a highly balanced charging of the battery cells of a particular battery module 10 may be achieved. As the battery cells 12 of a particular battery module 10 commonly have a fairly similar charging behavior, the intra-module, passive balancing is not very prone to wasting a lof of electric energy. Rather, the set of battery cells 12 can often be maintained in a balanced state with only little intervention by the discharge circuit 24 and, thus, with only little useless waste of electric energy and only little generation of waste heat.

The discharge circuit 24 may have any suitable implementation / design that allows for selectively discharging individual one(s) of the set of battery cells 12. For example, the discharge circuit 24 may have a large dissipating resistor and may be configured to selectively couple any one of the set of battery cells 12 to the dissipating resistor and to effect a discharge current from the particular battery cell through the dissipating resistor.

As stated above, the inter-module, active balancing of the rechargeable battery 2 takes place via the charge balancing bus 40. The rechargeable battery 2 is configured to determine a particular one or a particular subset of the plurality of battery modules 10 that cause(s) an undesirable charge imbalance with respect to the other battery modules 10 and that should be discharged for a better balance with respect to the other battery modules 10. The rechargeable battery 2 is further configured to carry out an inter-module, active balancing in this situation. The balancing is considered an inter-module balancing, because electric energy is selectively withdrawn from the selected one or the selected subset of the plurality of battery modules 10. Accordingly, the balance across the plurality of battery modules 10 is improved. The balancing is considered active, because the withdrawn charge is not dissipated / wasted, as in the intra-module, passive balancing described above, but is put to use in other portions of the rechargeable battery 2. The charge balancing bus 40 provides the infrastructure for this active use of the power / electric energy withdrawn from the selected one or the selected subset of the plurality of battery modules 10.

With the DC/DC converter 16, charge can be withdrawn from the set of battery cells 12 of the battery module 10 and power can be provided to the charge balancing bus 40. In the exemplary embodiment of Fig. 1, when a particular battery module 10 is selected for supplying power to the charge balancing bus 40 for the inter-module, active balancing, the withdrawn power from the set of battery cells 12 is used in a two-way manner. First, the three-way transformer of the DC/DC converter 16 is used to supply power to the charge balancing bus 40. Second, the three-way transformer of the DC/DC converter 16 is used to supply power to the cell management controller 14 for its operation. Both of these mechanisms will be described in more detail below.

With the DC/DC converter 16, power from the set of battery cells 12 can be received at the first and second terminals 16a, 16b of the DC/DC converter 16 and can be passed on to the charge balancing bus 40 via the fifth terminal 16e of the DC/DC converter 16. In the exemplary embodiment of Fig. 1, the charge balancing bus 40 provides this power to the battery management system 30 and to the further loads 50. The battery management system 30, in particular the battery controller 34 thereof, and the further loads 50 can use said power from the charge balancing bus 40 for covering their power demands. Instead of relying on power from a local power distribution within the rechargeable battery 2, which may for example receive power from a standard plug-and-socket connection (not shown) to the power grid, the battery management system 30 and the further loads 50 can run their operations with power from the charge balancing bus 40. Stated differently, in situations where power is available on the charge balancing bus 40, the battery management system 30 and the further loads 50 can use said power and reduce or even temporarily stop their power consumption of external power. By reducing the need for external power for operating the battery management system 30 and/or the further loads 50, the overall efficiency of the rechargeable battery 2 may be increased. In an exemplary embodiment, the battery management system 30 may have a power consumption of between 10W and 50W, and the power consumption of external power may be reduced by using an according amount of power provided via the charge balancing bus 40.

With the DC/DC converter 16, part of the power that is received from the set of battery cells 12 at the first and second terminals 16a, 16b may also be passed on to the cell management controller 14 via the fourth terminal 16d of the DC/DC converter 16. Similar to the battery management system 30, the cell management controller 14 may use this power, available via the DC/DC converter 16, for running its operations and may reduce its reception of external power. Stated differently, instead of using power from a local power distribution within the rechargeable battery 2, the cell management controller 14 may use the power from the DC/DC converter 16, when available in the course of active inter-module balancing, to run its operations. Again, this may help in achieving a high overall efficiency of the rechargeable battery 2. In an exemplary embodiment, the cell management controller 14 may have a power consumption of around 10W, and the power consumption of external power may be reduced by an according amount with the usage of power that is available via the DC/DC converter 16.

While the supply of power to the cell management controller 14 via the ancillary power output 16d of the DC/DC converter may help in the overall efficiency of the rechargeable battery, it is understood that this is an optional feature. It is also possible that the DC/DC converter comprises a two-way transformer and is simply capable of enabling a power transfer from the set of battery cells 12 to the charge balancing bus 40.

For the active balancing, one or more battery modules 10 are selected, from which power is provided to the charge balancing bus 40. In other words, the rechargeable battery 2 is configured to supply power from a selected one or a selected subset of the plurality of battery modules 10 to the charge balancing bus 40 for an active balancing across the plurality of battery modules 10. It can also be said that the rechargeable battery selects at least one particular battery module 10 / at least one selected battery module 10, from which power is supplied to the charge balancing bus 40 for an active balancing across the plurality of battery modules 10. The at least one particular / selected battery module 10 can be one battery module 10 or can be a plurality of battery modules 10, but cannot be the entirety of all battery modules 10. In accordance therewith, the term subset is understood to refer to two or more selected ones of the battery modules, but cannot refer to the entirety of the battery modules / cannot refer to all battery modules.

The selection of the one or more battery modules 10, from which power is supplied to the charge balancing bus 40, may be carried out by the battery controller 34 of the battery management system 30. In the exemplary embodiment of Fig. 1, the battery controller 34 performs the selection of the selected one or the selected subset of the plurality of battery modules 10 on the basis of the state of charge of the plurality of battery modules 10.

In operation, the battery controller 34 collects information regarding the state of charge of each of the battery modules 10. In particular, the battery controller 34 may continuously / periodically receive state of charge information from each of the plurality of battery modules 10 via the battery communication bus 36. With this information, the battery controller 34 determines the selected one or the selected subset of the plurality of battery modules 10, which supply power to the charge balancing bus 40. This determination may be carried out in accordance with any suitable logic that works towards balancing the plurality of battery modules 10.

In a first exemplary embodiment, the battery controller 34 determines that battery module 10 with the highest state of charge as the selected one of the plurality of battery modules 10, i.e. as the selected battery module for supplying power to the charge balancing bus. In such an embodiment, the battery module 10 with the highest state of charge is selected for supplying power to the charge balancing bus 40, as long as it has the highest state of charge. When the state of charge of that battery module falls below the state of charge of another battery module, that other battery module is selected for supplying power to the charge balancing bus 40. With this selection algorithm, the power from the highest charged battery module is used for the operation of the battery management system 30 and the further loads 50, and this diversion of power helps in achieving a balanced state across the plurality of battery modules 10.

In a second exemplary embodiment, the battery controller 34 does not select one battery module, but a predefined number k of battery modules as those battery modules that supply power to the charge balancing bus 40. In particular, the battery controller 34 may select those k battery modules with the highest state of charge as the selected subset of battery modules, from which power is supplied to the charge balancing bus 40. Such a selection of k battery modules may help to effect a quicker balancing of the plurality of battery modules 40. The number k may be any suitable number and may be 2 or 3 or 4 or 5 or a higher number. It is also possible that the number k is made dependent on the spread in the state of charge of the plurality of battery modules. In case the spread in the state of charge is comparably high, the battery controller 34 may use a higher number k.

In a third exemplary embodiment, the battery controller 34 relies on the distribution of the state of charge of the plurality of battery modules 10 and may select one or more battery modules on the basis thereof. In particular, the battery controller 34 may receive the state of charge information from all of the plurality of battery modules 10 and may determine an average state of charge from this information. The battery controller 34 may further determine a state of charge threshold and may determine the one or more battery modules 10 that are above this state of charge threshold as the selected one or the selected subset of the plurality of battery modules 10, from which power is supplied to the charge balancing bus 40. The state of charge threshold may be set depending on the average state of charge. For example, the state of charge threshold may be a value between 100% and 130% of the average state of charge, in particular a value of between 105% and 120% of the average state of charge. In a particular embodiment, the state of charge threshold may be 110% of the average state of charge.

For the selected one or the selected subset of the plurality of battery modules 10, the battery controller 34 communicates said selection to the cell management controller(s) 14 of the respective battery module(s). The cell management controller(s) 14 of the selected battery module(s) 10 control(s) the respective DC/DC converter(s) 16 to supply power from the respective set of battery cells 12 to the charge balancing bus 40.

The determination of the selected one or the selected subset of the plurality of battery modules 10 may take into account other factors apart from the state of charge. For example, the state of health of the plurality of battery modules 10 may additionally be considered. The state of health is a well-established metric that provides an indication how the current maximum capacity of a battery entity compares to its initial / nominal maximum capacity. Stated differently, the state of health provides an indication how far along the aging process of a battery entity has come. In an exemplary embodiment, the battery controller 34 may generally select the one battery module with the highest state of charge for the active balancing, but may additionally select a second battery module for the active balancing, in case the battery module with the second highest state of charge has a particularly low state of health, e.g. a state of health below a predefined state of health threshold. Such an approach may help to keep aged battery modules away from overcharging / from close to overcharging. In this way, battery modules with a poor state of health may be handled in a particularly gentle manner, which may help to extend their life span. The above approach is exemplary only, and it is understood that the state of health of the plurality of battery modules 10 and/or other factors may be taken into account in various ways for achieving a beneficial balancing of the plurality of battery modules 10.

Also, while the state of charge is a well-suited and well-established metric for determining the selected one or the selected subset of the plurality of battery modules 10, other charge-based metrics may be used as well. It is further understood that the charge / state of charge may not be a directly measured quantity, but may be deduced in any suitable manner from available electrical parameters, such as from the voltage across the respective power cells 12.

The above description of the combination of intra-module, passive balancing and inter-module, active balancing has been described for the charging of the rechargeable battery 2. It is understood that said combination of intra-module, passive balancing and inter-module, active balancing may also be applied during the discharging of the rechargeable battery 2. Specifically, while overcharging of individual battery cells / individual battery modules is prevented in the charging operation, the balancing may be used in the discharging operation to prevent deep discharge of individual battery cells / individual battery modules. By keeping the plurality of battery modules 10 balanced during the discharging, a high portion of the available power can be provided to an external load, without risking a deep discharge of individual battery cell(s) / battery module(s).

A cold start / black start operation of the rechargeable battery 2 is described as follows. As indicated above, the rechargeable battery 2 has a standard plug-and-socket connection (not shown), with which the rechargeable battery 2 is coupled to a standard household outlet of the power grid. In regular operating scenarios, the external power received through this standard plug-and-socket connection is used for operating the battery management system 30, the cell management controllers 14, and the further loads 50, in case no power from the charge balancing bus 40 is provided in the course of the above discussed active balancing. A local power distribution (not shown) may be provided within the rechargeable battery 2 for the distribution of this external power. With the charge balancing bus 40, a cold start / black start operation of the rechargeable battery 2 becomes possible, without having to rely on this external power. For example, a cold start button may be provided on the battery management system 30. The battery controller 34 may be configured to effect a wake-up pulse on the battery communication bus 36, when the cold start button is operated by a user. The cell management controllers 14 may be configured to control the DC/DC converters 16 to supply power to the charge balancing bus 40, when the wake-up pulse from the battery controller 34 is received. With this power on the charge balancing bus 40, the whole rechargeable battery 2 may be powered up. In particular, the rechargeable battery 2 may be configured to operate the battery management system 30, the further loads 50, and the cell management controllers 14 with power withdrawn from the sets of power cells 12 of the plurality of battery modules 10. A cold start / black start functionality, relying on the charge balancing bus 40, is possible.

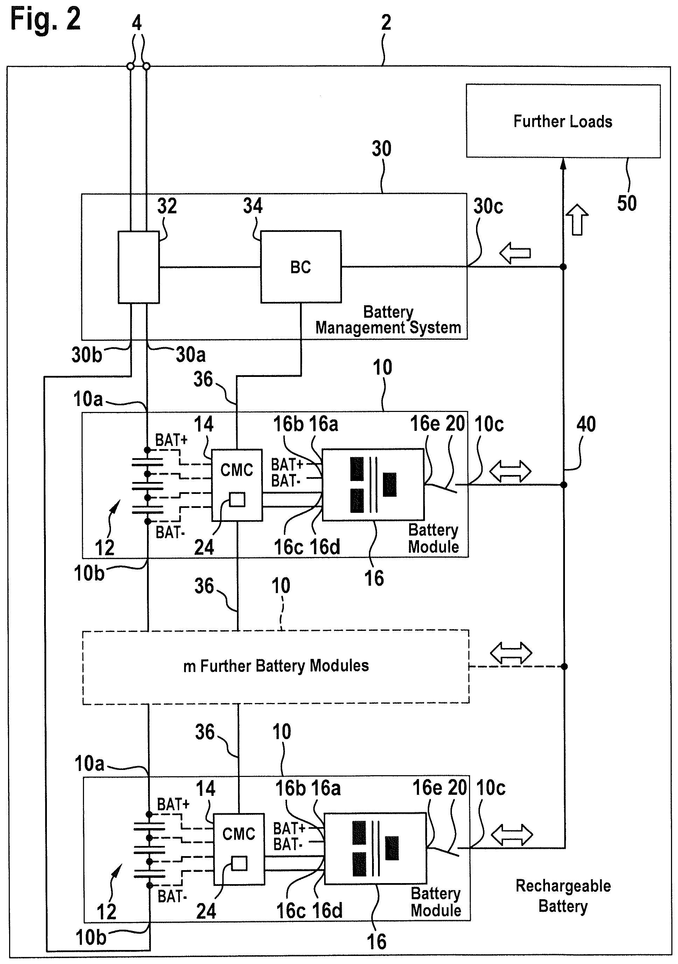

Fig. 2 shows a block diagram of a rechargeable battery 2 according to another exemplary embodiment of the invention. The rechargeable battery 2 of Fig. 2 is very similar to the rechargeable battery 2 of Fig. 1. Like elements are denoted with like reference numerals, and reference is made to their description above. The following discussion focusses on the differences between the rechargeable battery 2 of Fig. 2 and the rechargeable battery 2 of Fig. 1.

For each of the plurality of battery modules 10 of the rechargeable battery 2 of Fig. 2, the DC/DC converter 16 is coupled to the charge balancing bus 40 via a switch 20. In particular, the fifth terminal 16e of the respective DC/DC converter 16 is coupled to the charge balancing bus 40 via the switch 20. As compared to the embodiment of Fig. 1, the diode 18 is replaced with the switch 20.

The switch 20 allows for a selective, bidirectional power flow between the DC/DC converter 16 and the charge balancing bus 40. In this way, the switch 20 allows for the DC/DC converter to implement a selective, bidirectional power flow between the respective set of battery cells 12 of the battery module 10 in question and the charge balancing bus 40. Accordingly, the battery module 10 and, in particular, the set of battery cells 12 of each battery module can supply power to the charge balancing bus 40 and can receive power from the charge balancing bus 40. This may be achieved via an according control of the DC/DC converter 16 and the switch 20. The capability of providing a two-way power flow into and out of the battery module 10 is indicated via according double arrows at the coupling points between the battery modules 10 and the charge balancing bus 40.

With this architecture, power from the charge balancing bus 40 may not only be used for operating the battery management system 30 and the further loads 50, but also for charging one or more selected battery modules 10. In particular, the power supplied from the selected one or the selected subset of the plurality of battery modules 10 to the charge balancing bus 40 may be received by the battery management system 30, by the further loads 50, and by one or more other battery modules, selected as power-receiving battery modules. In other words, one or more battery modules may be selected as power-supplying battery modules, i.e. as battery modules supplying power to the charge balancing bus 40, and one or more other battery modules may be selected as power-receiving battery modules, i.e. as battery modules receiving power from the charge balancing bus 40.

The power-receiving battery module(s) may be selected in a manner analogous to the power-supplying battery module(s). For example, the power-receiving battery module(s) may be the one battery module or the k battery modules with the lowest state of charge. In another example, the power-receiving battery module(s) may be those one or more battery modules whose state of charge is below a power-receiving state of charge threshold. The power-receiving state of charge threshold may be set depending on the average state of charge of the plurality of battery modules 10. For example, the power-receiving state of charge threshold may be a value of between 70% and 100% of the average state of charge, in particular a value of between 80% and 95% of the average state of charge. In a particular embodiment, the power-receiving state of charge threshold may be 90% of the average state of charge.

With the two-way power flow capabilities of the DC/DC converters 16 and with the charge transfer between the battery modules 10, an even quicker balancing of the plurality of battery modules 10 may be achieved. Also, an overall quicker charging of the rechargeable battery 2 may be achieved. By using the power withdrawn from battery modules 10 with a comparably high state of charge not only for the battery management system 30 and/or the further loads 50, but also for battery modules 10 with a comparably low state of charge, an additional useful way of using power from the charge balancing bus 40 is provided. This may again help the overall efficiency of the rechargeable battery 2.

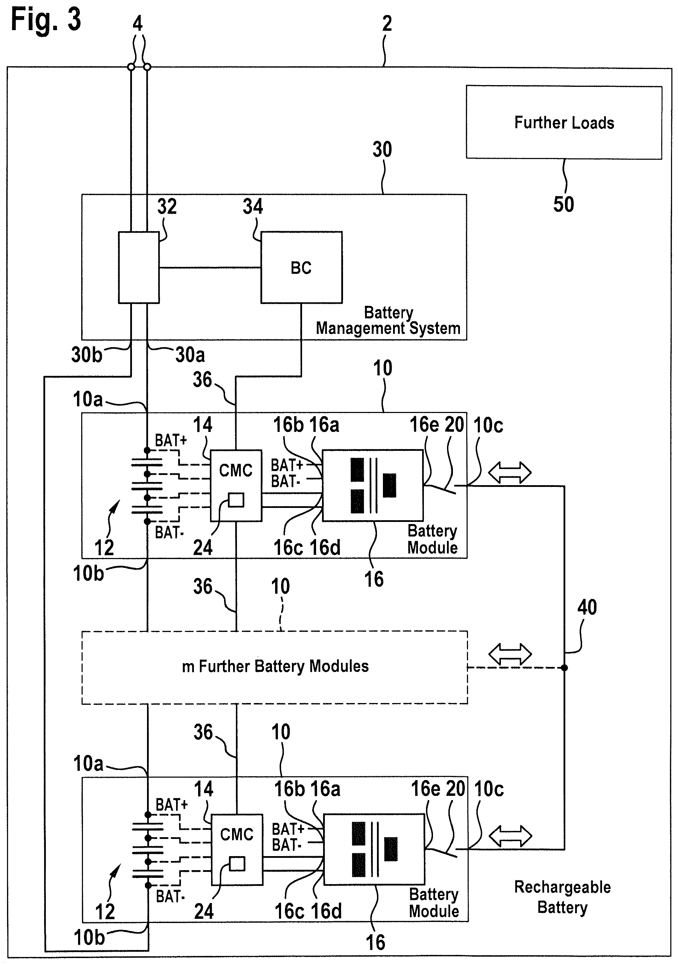

Fig. 3 shows a block diagram of a rechargeable battery 2 according to yet another exemplary embodiment of the invention. The rechargeable battery 2 of Fig. 3 is very similar to the rechargeable battery 2 of Fig. 2. Like elements are denoted with like reference numerals, and reference is made to their description above. The following discussion focusses on the differences between the rechargeable battery 2 of Fig. 3 and the rechargeable battery 2 of Fig. 2.

As compared to the rechargeable battery 2 of Fig. 2, the battery management system 30 and the further loads 50 of the rechargeable battery 2 of Fig. 3 are not coupled to the charge balancing bus 40. Accordingly, the charge balancing bus 40 of the rechargeable battery 2 of Fig. 3 is only coupled to the plurality of battery modules 10. As a result, the charge balancing bus 40 is only used for a power transfer among the plurality of battery modules 10. With this set-up, an effective balancing across the plurality of battery modules 10 may be achieved, and the power withdrawn from one or more battery modules 10 may be put to use in other other battery modules. With this set-up, a comparably easy implementation may be made possible, as no means for selective reception of power from the charge balancing bus 40 need to be implemented in the battery management system 30 and the further loads 50.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention not be limited to the particular embodiment disclosed, but that the invention include all embodiments falling within the scope of the following claims.

## Claims

1. Rechargeable battery (2), comprising:
a plurality of battery modules (10), wherein each of the plurality of battery modules (10) comprises a set of battery cells (12) and a cell management controller (14);
a battery management system (30), coupled to the plurality of battery modules (10) and configured to manage charging of the plurality of battery modules (10); and
a charge balancing bus (40), coupled to the plurality of battery modules (10);
wherein each of the plurality of battery modules (10) comprises a discharge circuit (24), coupled to the set of battery cells (12) of the respective battery module, for an intra-module, passive balancing across the set of battery cells (12) within the respective battery module;
wherein each of the plurality of battery modules (10) comprises a DC/DC converter (16), coupled between the respective set of battery cells (12) and the charge balancing bus (40); and
wherein the rechargeable battery (2) is configured to supply power from a selected one or a selected subset of the plurality of battery modules (10) to the charge balancing bus (40) for an active balancing across the plurality of battery modules (10), wherein the power from said selected one or said selected subset of the plurality of battery modules (10) is used in the rechargeable battery (2) outside of said selected one or said selected subset of the plurality of battery modules (10).

2. Rechargeable battery (2) according to claim 1, wherein the battery management system (30) is coupled to the charge balancing bus (40) and wherein the rechargeable battery (2) is configured to supply power from said selected one or said selected subset of the plurality of battery modules (10) to the battery management system (30) via the charge balancing bus (40).

3. Rechargeable battery (2) according to claim 2, wherein the battery management system (30) comprises a battery controller (34) and wherein the battery management system (30) is configured to operate the battery controller (34) with power supplied from said selected one or said selected subset of the plurality of battery modules (10) to the battery management system (30) via the charge balancing bus (40).

4. Rechargeable battery (2) according to any of the preceding claims, wherein the rechargeable battery (2) is configured to select said selected one or said selected subset of the plurality of battery modules (10) on the basis of the respective state of charge of the plurality of battery modules (10).

5. Rechargeable battery (2) according to claim 4,
wherein the rechargeable battery (2) is configured to set a state of charge threshold and to select said selected one or said selected subset of the plurality of battery modules (10) on the basis of the state of charge threshold, wherein the rechargeable battery (2) is in particular configured to set the state of charge threshold on the basis of a distribution of the state of charge of the plurality of battery modules (10),
and/or
wherein the rechargeable battery (2) is configured to select a predefined number of battery modules with the highest state of charge as said selected one or said selected subset of the plurality of battery modules (10).

6. Rechargeable battery (2) according to claim 4 or 5, wherein the rechargeable battery (2) is configured to select said selected one or said selected subset of the plurality of battery modules (10) on the basis of the respective state of charge and the respective state of health of the plurality of battery modules (10).

7. Rechargeable battery (2) according to any of the preceding claims,
wherein the rechargeable battery (2) is configured to select said selected one or said selected subset of the plurality of battery modules (10) in a centralized manner at the battery management system (30),
and/or
wherein the rechargeable battery (2) is configured to select said selected one or said selected subset of the plurality of battery modules (10) in a decentralized manner at the cell management controllers (14) of the plurality of battery modules (10).

8. Rechargeable battery (2) according to any of the preceding claims, wherein the DC/DC converters (16) of the plurality of battery modules (10) are unidirectional DC/DC converters.

9. Rechargeable battery (2) according to any of the preceding claims, wherein the DC/DC converters (16) of the plurality of battery modules (10) are bidirectional DC/DC converters.

10. Rechargeable battery (2) according to any of the preceding claims, wherein the rechargeable battery (2) is configured to supply power from said selected one or said selected subset of the plurality of battery modules (10) to one or more selected power-receiving battery modules of the plurality of battery modules (10) via the charge balancing bus (40).

11. Rechargeable battery (2) according to any of the preceding claims, wherein, for each of the plurality of battery modules (10), the respective DC/DC converter (16) has an ancillary power output (16d), coupled to the respective cell management controller (14) for supplying power to the respective cell management controller (14).

12. Rechargeable battery (2) according to any of the preceding claims, wherein, for each of the plurality of battery modules (10), the respective cell management controller (14) is configured to control the respective DC/DC converter (16).

13. Rechargeable battery (2) according to any of the preceding claims, wherein the battery management system (30) is configured to effect a cold start of the rechargeable battery (2) with power supplied from the plurality of battery modules (10) to the charge balancing bus (40).

14. Rechargeable battery (2) according to any of the preceding claims,
wherein the rechargeable battery (2) is a stationary rechargeable battery,
or
wherein the rechargeable battery (2) is a vehicle-based rechargeable battery, such as a rechargeable battery of a ship.

15. Method of performing charge balancing in a rechargeable battery (2), the rechargeable battery (2) comprising a plurality of battery modules (10), with each of the plurality of battery modules (10) comprising a set of battery cells (12), a DC/DC converter (16) and a discharge circuit (24), and a charge balancing bus (40), coupled to the plurality of battery modules (10); wherein the method comprises:
at each of the plurality of battery modules (10), performing intra-module, passive balancing across the set of battery cells (12) with the discharge circuit (24);
performing active balancing across the plurality of battery modules (10) by supplying power from a selected one or a selected subset of the plurality of battery modules (10) to the charge balancing bus (40) via the respective DC/DC converter (16); and
using the power from said selected one or said selected subset of the plurality of battery modules (10) in the rechargeable battery (2) outside of said selected one or said selected subset of the plurality of battery modules (10).
